# EUROPEAN PATENT SPECIFICATION

(11) **EP 1 906 046 B1**
(45) Date of publication and mention of the grant of the patent: **09.11.2011**
(21) Application number: 07019089.7
(22) Date of filing: 27.09.2007
(51) Int. Cl.: F16F 9/512

(54) **Base valve mechanism for shock absorber**
Bodenventilmechanismus für einen Stoßdämpfer
Mécanisme de soupape de base pour amortisseur

(30) Priority: 28.09.2006 JP 2006265155
(43) Date of publication of application: 02.04.2008
(73) Proprietor: Kayaba Industry Co., Ltd., Tokyo 105-6190 (JP)
(72) Inventor: Chikamatsu, Satoshi, Tokyo 105-6190 (JP); Watanabe, Kouichi, Tokyo 105-6190 (JP)
(74) Representative: Grünecker, Kinkeldey, Stockmair & Schwanhäusser

(56) References cited:
- GB-A- 2 070 730
- JP-A- 8 200 424
- US-A1- 2005 115 786

## Description

### FIELD OF THE INVENTION

This invention relates to a base valve mechanism installed in the bottom of a cylinder of a shock absorber, which generates a damping force when working oil in the cylinder flows out therethrough, according to the preamble of claim 1. Such a mechanism is known from US 2005/115786 A1.

### BACKGROUND OF THE INVENTION

In a double-tube type shock absorber for a vehicle, when a piston rod penetrates a cylinder, a part of working oil in the cylinder is expelled to a reservoir provided outside the cylinder, for example, via a base valve mechanism installed in the bottom of the cylinder.

A piston connected to the piston rod separates two oil chambers in the cylinder. The base valve mechanism comprises a valve disk which separates a communicating space communicating with the reservoir from an oil chamber below the piston, and a leaf valve closing an outlet of a port which penetrates the valve disk and opens onto the communicating space.

When the shock absorber contracts, the piston displaces towards the bottom of the cylinder, and of the two oil chambers, the oil chamber formed around the piston rod enlarges whereas the oil chamber on the opposite side, or in other words the oil chamber facing the base valve, contracts. The working oil in the contracting oil chamber pushes open the leaf valve and flows out into the reservoir. The base valve mechanism generates a damping force corresponding to its flow resistance. This is a contraction stroke damping force of the shock absorber.

When the shock absorber elongates, the piston rod side oil chamber contracts and the oil chamber on the opposite side enlarges. Working oil in the piston rod side oil chamber flows out into the oil chamber on the opposite side via an elongation stroke damping valve installed in the piston, thereby generating an elongation stroke damping force.

As described above, the contraction stroke damping force in a double-tube type shock absorber is generated when the working oil flows out from the cylinder. The damping force characteristic in the contraction stroke of the shock absorber therefore depends on the structure of the base valve mechanism. The leaf valve in the base valve mechanism allows oil to flow by deforming its outer circumferential part depending on a differential pressure between the upstream and downstream sides of the valve body. The damping force generated by a leaf valve of this kind increases sharply as the piston displacement speed increases, and tends to be excessive in a middle to high speed region of piston displacement.

JPH08-200424A, published by the Japan Patent Office in 1996, proposes a base valve mechanism that improves the damping force characteristic of a leaf valve. The prior art teaches supporting the base of the valve body elastically without fixing. With this construction, the valve, body not only deforms but also retreats from the opening of the port depending on the differential pressure between the upstream and downstream sides of the valve body. Specifically, when the piston displacement speed reaches the middle to high speed region, the entire valve body retreats from the opening of the port, and hence the flow sectional area increases, thereby suppressing an excessive increase in the flow resistance.

### SUMMARY OF THE INVENTION

This valve mechanism is effective in suppressing an excessive damping force in the middle to high speed region of piston displacement. However, since the entire valve body retreats in the middle speed region or above, the damping force characteristic does not vary in the middle speed region and the high speed region of piston displacement. When a spring load of the leaf valve is set to generate a favorable damping force in the middle speed region, the damping force in the high speed region may become insufficient.

It is therefore an object of his invention to provide a base valve mechanism which can set different damping force characteristics in the middle speed region and the high speed region of piston displacement such that a favorable damping force is obtained in each of the speed regions.

In order to achieve the above object, this invention provides a base valve mechanism according to claims 1 and 6.

The mechanism comprises a damping valve which resist a flow of working oil from the oil chamber to the reservoir, a pressure-responsive throttle which narrows a flow path of working oil from the oil chamber to the reservoir via the damping valve when a differential pressure between the oil chamber and the reservoir exceeds a predetermined value, and a bypass valve which allows the working oil to flow from the oil chamber to the reservoir bypassing the pressure-responsive throttle when the differential pressure increases further after exceeding the predetermined value.

The details as well as other features and advantages of this invention are set forth in the remainder of the specification and are shown in the accompanying drawings.

### BRIEF DESCRIPTION OF THE DRAWINGS

FIG. 1 is a longitudinal sectional view of essential parts of a shock absorber, showing a base valve mechanism according to this invention.

FIG. 2 is a diagram showing a damping force characteristic realized by the base valve mechanism.

FIG. 3 is a longitudinal sectional view of essential parts of a shock absorber, showing a base valve mechanism according to a further embodiment of this invention.

### DESCRIPTION OF THE PREFERRED EMBODIMENTS

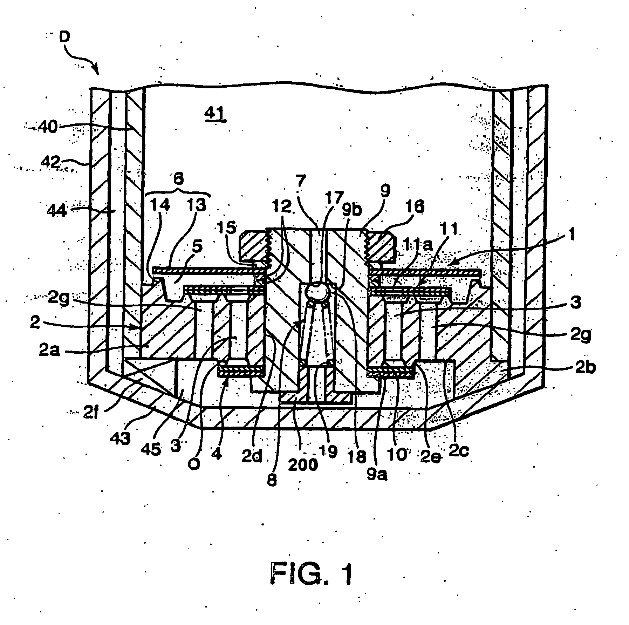

Referring to FIG. 1 of the drawings, a double-tube type hydraulic shock absorber D for a vehicle comprises a cylinder 40 disposed in an outer tube 42 coaxially. An oil chamber 41 in which working oil is enclosed is formed in the cylinder 40. A space in the outer tube 42 outside the cylinder 40 is used as a reservoir 44 in which working oil is enclosed together with a gas. The oil chamber 41 enlarges and contracts depending on the displacement of a piston, not shown, which delimits the upper end of the oil chamber 41. Specifically, the oil chamber 41 enlarges when the shock absorber is in an elongation stroke and contracts when the shock absorber is in a contraction stroke.

When the oil chamber 41 contracts, the working oil in the oil chamber 41 flows out into the reservoir 44 via a base valve mechanism 1 installed in the bottom of the cylinder 40.

The base valve mechanism 1 comprises a valve disk 2 in which a damping valve 4, a check valve 11, a pressure-responsive throttle 6, and a bypass valve 8 are installed.

The valve disk 2 comprises a disk-shaped main body 2a, and a flange portion 2b formed at the lower end of the outer circumference of the main body 2a. The valve disk 2 is fixed to the lower end of the cylinder 40 by gripping the flange portion 2b between the lower end of the cylinder 40 and a bottom 43 of the outer tube 42. The outer circumference of the main body 2a is fitted into the inner circumferential surface of the cylinder 40. According to this structure, the valve disk 2 separates the lower portion of the cylinder 40 into the oil chamber 41 and a space 45 located below the valve disk 42. The space 45 is formed between the valve disk 2 and the bottom 43 of the outer tube 42, and connected to the reservoir 44c via a notch 21 formed in the wall surface of the cylinder 40.

A recess 2c is formed in the lower end surface of the main body 2a so as to provide the space 45. A bolt hole 2d is formed through the center of the main body 2a. A bolt 9 penetrates the bolt hole 2d and a nut 16 is secured onto the penetrating end of the bolt 9. A plurality of ports 3 and a plurality of ports 2g penetrate the main body around the bolt 9 in the vertical direction in the figure. The ports 2g and 3 are disposed along circles at predetermined distances from the center of the valve disk 2. The circle on which the ports 2g are disposed has a greater diameter than the circle on which the ports 3 are disposed. In other words, the ports 2g are more distant from the center of the valve disk 2 than the ports 3. A bypass passage 7 vertically penetrating the bolt 9 is formed along the center axis of the bolt 9.

The damping valve 4 is constituted by a leaf valve, the valve body of which is constructed from a plurality of stacked circular leaves. A hole is formed through the center of the leaves so as to allow the bolt 9 to pass through, and the inner circumference of the leaves is gripped between a bolt head 9a of the bolt 9 and the valve disk 2. A valve seat 2e projecting downward is formed in the lower surface of the main body 2a of the valve disk 2 along a circle located between the ports 3 and the ports 2g. The outer circumference of the leaves is seated on the valve seat 2c from below to close a downward opening 10 of the ports 3. The outer circumference of the leaves deforms downward depending on the differential pressure between the pressure in the oil chamber 41 led to the ports 3 and the pressure in the space 45, thereby connecting the ports 3 to the space 45. An orifice O having a minute cross-sectional area is formed in the valve seat 2c so as to permanently connect the port 3 to the space 45 even when the valve body is seated on the valve seat 2e. The number of leaves used for the valve body may be determined arbitrarily depending on the damping force characteristic required of the damping valve 4. It is also possible to use a plurality of leaves having different outer diameters.

The check valve 11 and the pressure-responsive throttle 6 are disposed on the upper end surface of the main body 2a of the valve disk 2. The check valve 11 is constituted by a leaf valve, the valve body of which is constructed from a plurality of stacked leaves. The valve body of the pressure-responsive throttle 6 is constituted by a flat circular plate 13. A hole for allowing the bolt 9 to pass through is formed through the center portion of these valve bodies. The tip of the bolt 9 penetrates the valve disk 2, the valve body of the check valve 11, a washer 12, the circular plate 13 of the pressure-responsive throttle 6, and a washer 15 from below in this order. The nut 16 is finally secured onto the tip of the bolt 9 such that these members are gripped between the nut 16 and the main body 2a of the valve disk 2.

The check valve 11 has a diameter that can cover the ports 2g. In the upper end surface of the main body 2a of the valve disk 2, a valve seat projecting upward is formed along a circle located outside of the ports 2g. Another valve seat projecting upward is formed along a circle located between the ports 2g and ports 3. The valve body of the check valve 11 is seated on these valve seats so as to act as a check valve which prevents working oil in the oil chamber 41 from flowing into the ports 2g. On the other hand, with respect to the flow of working oil from the ports 2g to the oil chamber 41, the valve body of the check valve 11 lifts without resistance to allow the working oil to flow therethrough. The valve body of the check valve 11 has holes 11a formed in locations facing the ports 3 to allow the working oil to flow between the oil chamber 41 and the ports 3.

The pressure-responsive throttle 6 comprises a valve seat 14 projecting upward from the main body 2a of the valve disk 2 facing the outer circumferential part of the circular plate 13. A space 5 below the circular plate 13 inside the valve seat 14 forms a passage for the working oil flowing from the oil chamber 41 to the reservoir 44. The working oil flowing from the oil chamber 41 to the space 5 suffers a pressure loss when passing though a gap between the circular plate 13 and the valve seat 14. As a result, a differential pressure is generated between the oil chamber 41 and the space 5. This differential pressure increases as the flow velocity of the working oil increases, or in other words as the piston displacement speed of the shock absorber increases. Accordingly, a downward deforming force based on the differential pressure acts on the circular plate 13. The circular plate 13 deformed downward thereby causes the outer circumference to approach the valve seat 14 such that the flow resistance to the working oil passing through the gap increases further. When the differential pressure increases beyond a predetermined value, the circular plate 13 is finally seated on the valve seat 14. When the circular plate 13 is seated on the valve seat 14, the pressure-responsive throttle 6 enters a closed state and the working oil is prevented from flowing from the oil chamber 41 to the reservoir 44 via the ports 3 and the damping valve 4. Thereafter, until the differential pressure becomes lower than the predetermined value, the pressure-responsive throttle 6 remains in the closed state.

The bypass valve 8 is installed in the bypass passage 7. The bypass passage 7 increases its diameter via a step 9b on the way from the oil chamber 41 to the space 45 through the bolt 9. The bypass valve 8 uses the step 9 as a valve seat 17. The bypass valve 8 comprises a spherical valve body 18 seated on the valve seat 17 from below, a spring 19 biasing the valve body 18 towards the valve seat 17, and a spring seat 200 supporting the spring 19. The spring seat 200 is screwed into the inner circumference of the opening of the bypass passage 7 facing the space 45. The spring seat 200 has a hollow portion through which the bypass passage 7 is connected to the space 45. The valve body 18 is normally seated on the valve seat 17 to close the bypass passage 7, but when the differential pressure between the oil chamber 41 and the space 45 exceeds a predetermined relief pressure, it retreats from the valve seat 17 against the spring 19 and allows working oil to flow from the oil chamber 41 to the space 45 via the bypass passage 7 while exerting a flow resistance based on the spring load of the spring 19 thereon.

When the shock absorber D is in the contraction stroke, the piston displaces downward in the cylinder 40 and the oil chamber 41 contracts. The working oil in the contracting oil chamber 41 flows into the enlarging oil chamber above the piston, but working oil corresponding to the volume by which the piston rod penetrates the cylinder cannot be accommodated in the cylinder 40 and spills out from the oil chamber 41 into the reservoir 44 through the base valve mechanism 1 and the space 45.

The oil chamber 41 and the space 45 communicate permanently with each other via the orifice O having a minute cross-sectional area formed in the valve seat 2c of the damping valve 4. Accordingly, when the displacement speed of the piston is in a low speed region, the working oil in the oil chamber 41 flows out into the space 45 through the orifice O. In this speed region, the differential pressure between the oil chamber 41 and the space 45 is too small to cause the pressure-responsive throttle 6 and the bypass valve 8 to operate. In the damping valve 4 also, the valve body constituted by the stacked leaves does not deform. As a result, the oil flow from the oil chamber 41 to the space 45 is formed only through the orifice O, and the shock absorber D generates a damping force based on the flow characteristic of the orifice O.

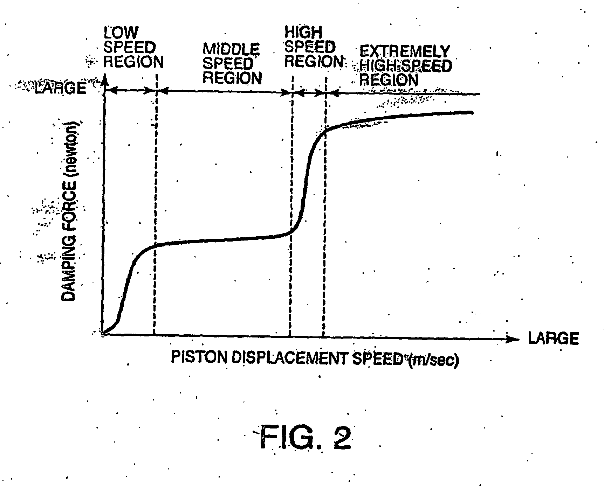

Referring to FIG. 2, the damping force characteristic of the shock absorber D in the low speed region of piston displacement is thus dominated by the flow characteristic of the orifice O, and hence the generated damping force shows a steep increase with respect to an increase in the piston displacement speed.

When the piston displacement speed reaches a middle speed region, the differential pressure between the oil chamber 41 and the space 45 reaches the elastically deforming pressure of the valve body of the damping valve 4, and the outer circumference of the valve body constituted by the leaves deforms and is thereby lifted from the valve seat 2c. As a result, the flow cross sectional area between the opening 10 of the ports 3 and the space 45 increases noticeably. In this state, however, the differential pressure between the oil chamber 41 and the space 45 is still insufficient to cause the pressure-responsive throttle 6 and the bypass valve 8 to operate. As a result, the oil flow from the oil chamber 41 to the space 45 is formed through the damping valve 4 in the lifted state. Once the damping valve 4 is in the lifted state, the damping force is generated depending on the flow characteristic of the ports 3, and hence the increase rate of the damping force with respect to an increase in the piston displacement speed is small. Therefore, according to this base valve mechanism, an excessive increase in the generated damping force with respect to an increase in the piston displacement speed in the middle speed region can be prevented, as in the case of the prior art valve mechanism.

When the piston displacement speed reaches a high speed region, the differential pressure between the oil chamber 41 and the space 45 becomes greater than the operation pressure of the pressure-responsive throttle 6, and the pressure-responsive throttle 6 elastically deforms the outer circumference of the circular plate 13 downwards. As a result, the gap between the circular plate 13 and the valve seat 14 narrows, leading to a sharp increase in pressure loss in the flow of working oil from the oil chamber 41 to the space 5. In this state, since the bypass valve 8 is still closed, the damping force accompanying the working oil flowing from the oil chamber 41 to the reservoir 44 is mainly generated by the pressure loss which occurs in the gap between the circular plate 13 and the valve seat 14,

As a result, the damping force increases sharply as soon as the piston displacement speed shifts from the middle speed region to the high speed region.

As the piston displacement speed increases further after it has reached the high speed region, the differential pressure between the oil chamber 41 and the space 5 also increases further. When the circular plate 13 of the pressure-responsive throttle 6 is seated on the valve seat 14 due to a further increase in the differential pressure, the flow of working oil from the oil chamber 41 to the space 5 is prevented. As a result, the flow of working oil from the ports 3 to the space 45 is also prevented.

On the other hand, the increasing differential pressure between the oil chamber 41 and the space 5 finally causes the bypass valve 8 to open against the spring. 19. Thereafter, the working oil flows from the oil chamber 41 to the reservoir 44 through the bypass passage 7 exclusively. This speed region of piston displacement in which the bypass valve 8 opens will be referred to as an extremely high speed region.

In the extremely high speed region, the generated damping force depends on the flow resistance of the bypass passage 7, and the increase rate of the generated damping force with respect to an increase in the piston displacement speed becomes small, as is the case in the middle speed region. Accordingly, even though the damping force increases noticeably when the piston displacement speed reaches the high speed region, the generated damping force in the extremely high speed region can be prevented from becoming excessively large.

In the elongation stroke of the shock absorber D, the working oil in the reservoir 44 is led into the enlarging oil chamber 41 via the check valve 11 without resistance. The damping force in the elongation stroke is generated by a damping valve which is installed in the piston, if necessary.

As described above, according to this base valve mechanism 1, the damping force characteristic can be varied in multiple stages depending on the piston displacement speed region and hence the riding comfort of a vehicle is increased by having the damping force exactly match requirements.

The pressure-responsive throttle 6 comprises the valve seat 14 which is located outside the ports 2, 3 on the opposite side of the damping valve 4 and the circular plate 13 extending radially from the bolt 9 below the nut 16. The pressure-responsive throttle 6 therefore does not affect the height of the base valve mechanism 1. The bypass passage 7 and the bypass valve 8 arranged inside the bolt 9 also do not affect the height of the base valve mechanism 1. As a result, this base valve mechanism 1 does not affect the entire length of the shock absorber D.

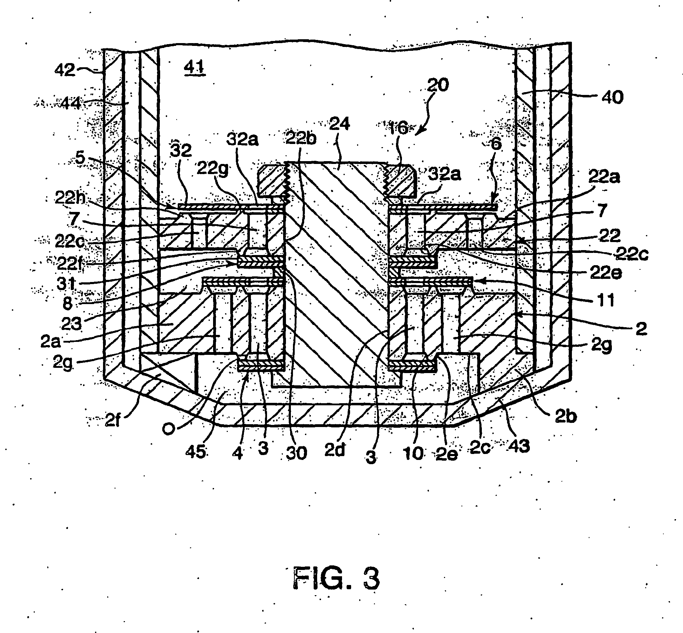

Referring to FIG. 3, a further embodiment of this invention will be described.

A base valve mechanism 20 according to this embodiment comprises a second valve disk 22 above the valve disk 2. The pressure-responsive throttle 6, the bypass passage 7, and the bypass valve 8 are provided in the second valve disk 22. The damping valve 4 and the check valve 11 are provided in the valve disk 2, as in the case of the first embodiment.

The valve disk 2 and the second valve disk 22 are integrated into one piece by a bolt 24 penetrating the valve disks 2, 22 and the nut 16 screwed onto a tip of the bolt 24. The outer circumference of the second valve disk 22 is fitted to the inner circumference of the cylinder 40, thereby separating a space 23 between the valve disk 2 and the second valve disk 22 from the oil chamber 41.

The second valve disk 22 comprises a plurality of bypass passages 7 and ports 22c penetrating therethrough in the vertical direction in the figure. The bypass passages 7 and the ports 22c are disposed respectively on circles at predetermined distances from the center of the second valve disk 22. The circle on which the bypass passages 7 are disposed has a greater diameter than the circle on which the ports 22c are disposed. In other words, the ports 22c are more distant from the center of the second valve disk 22 than the bypass passages 7.

The pressure-responsive throttle 6 comprises a circular plate 32 and a valve seat 22h projecting upward from the upper end surface of the second valve disk 22 so as to face the outer circumference of the circular plate 32. The valve seat 22h is formed on a circle outside the ports 22c centering on the bolt 24. A projection 22g is formed in the second valve disk 22 between the bypass passages 7 and the ports 22c along a circle centering on the bolt 24. The projection 22g contacts the circular plate 32 from below and supports the circular plate 32 when it deforms. The inner circumference of the circular plate 32 is gripped between the nut 16 and the second valve disk 22 via a spacer or washer. The outer circumference of the circular plate 32 faces the valve seat 22h. A predetermined gap is ensured between the outer circumference of the circular plate 32 and the valve seat 22h in a state where there is no pressure difference between the oil chamber 41 and the space 23. The circular plate 32 comprises holes 32a facing the bypass passages 7 so as not to prevent oil from flowing between the bypass passages 7 and the oil chamber 41.

The valve body 31 of the bypass valve 8 comprises a plurality of stacked leaves which close openings 22e onto the space 23 of the bypass passages 7. The leaves are fitted onto the outer circumference of the bolt 24 and gripped between the valve disk 2 and the second valve disk 22 together with a check valve 11 and a spacer 30. A valve seat 22e projects from the lower end surface of the second valve disk 22 towards the outer circumference of the valve body 31. The valve seat 22e is disposed along a circle centering on the bolt 24 so as to surround the bypass passages 7. The valve body 31 closes the bypass passages 7 when seated on the valve seat 22f while opening the bypass passages 7 by deforming its outer circumference in a direction to be detached from the valve seat 22f depending on an increase in differential pressure between the pressure in the oil chamber 41 led to the bypass passage 7 and the pressure in the space 23.

When the shock absorber D contracts, the piston displaces downward in the cylinder 40 and the pressure in the oil chamber 41 increases. In this base valve mechanism 20, when the piston displacement speed is in the low speed region, the working oil in the oil chamber 41 flows out into the space 23 via the gap between the circular plate 32 and the valve seat 22h of the pressure-responsive throttle 6 and the ports 22c. The working oil in the space 23 flows out into the reservoir 44 outside the cylinder 40 via the ports 3, the orifice O in the damping valve 4, and the space 45. The damping force generated by the base valve mechanism 20 in this region depends on the flow resistance of the orifice O, and increases sharply as the piston displacement speed increases.

When the piston displacement speed reaches the middle speed region, the valve body of the damping valve 4 is lifted from the valve seat 2e due to an increase in the differential pressure between the ports 3 and the space 45, and the working oil in the space 23 flows out into the space 45 via the ports 3. The damping force generated in this region depends on the flow characteristic of the ports 3 as in the case of the first embodiment, and the increase rate of the damping force with respect to an increase in the piston displacement speed is suppressed to be small.

When the piston displacement speed reaches the high speed region, the differential pressure between the oil chamber 41 and the space 23 exceeds the operation pressure of the pressure-responsive throttle 6, and the pressure-responsive throttle 6 deforms the outer circumference of the circular plate 32 downward. As a result, the gap between the circular plate 32 and the valve seat 22h narrows such that the pressure loss in the working oil moving from the oil chamber 41 to the space 23 increases sharply. Since the bypass valve 8 is closed in this state, the working oil flows from the oil chamber 41 to the space 23 through the gap between the circular plate 32 and the valve seat 22h exclusively. In the high speed region of piston displacement in which this gap narrows, therefore, the generated damping force increases greatly beyond the generated damping force in the middle speed region.

When the piston displacement speed increases further to the extremely high speed region, the differential pressure between the oil chamber 41 and the space 23 also increases further. Once the pressure-responsive throttle 6 causes the circular plate 32 to be seated on the valve seat 22h, oil can no longer flow from the oil chamber 41 to the space 23 via the ports 22c. On the other hand, due to the further increase in the differential pressure between the oil chamber 41 and the space 23, the valve body 31 of the bypass valve 8 deforms and becomes detached from the valve seat 22f to open the bypass passages 7. In the extremely high speed region, therefore, the working oil flows from the oil chamber 41 to the reservoir 44 via the bypass passages 7 exclusively.

The generated damping force in the extremely high speed region depends on the flow resistance of the bypass passages 7, and the increase rate of the generated damping force with respect to an increase in the piston displacement speed is as low as the increase rate in the middle speed region.

As a result, this base valve mechanism 20 increases the damping force greatly in the high speed region with respect to the middle speed region while suppressing the damping force from becoming excessively large even when the piston displacement speed increases further.

As described above, in this base valve mechanism 20 also, the damping force characteristic can be varied in multiple stages depending on the piston displacement speed region, and hence the riding comfort of a vehicle is increased by having the damping force exactly match requirements.

In this base valve mechanism 20, the damping force characteristic shown in FIG. 2 is realized by simply adding the second valve disk 22 which comprises the ports 22c, the pressure-responsive throttle 6, and the bypass passages 7, to a known base valve mechanism provided with the damping valve 4 and the check valve 11. Since this invention can thus be applied to a known base valve mechanism, the manufacturing cost of the base valve mechanism realizing this invention can be suppressed.

Although the invention has been described above with reference to certain embodiments of the invention, the invention is not limited to the embodiments described above. Modifications and variations of the embodiments described above will occur to those skilled in the art, within the scope of the claims.

The embodiments of this invention in which an exclusive property or privilege is claimed are defined as follows:

## Claims

1. A base valve mechanism (1, 20) installed in a bottom of a cylinder (40) of a shock absorber (D) so as to cause working oil to move between a oil chamber (41) provided in the cylinder (40) and a reservoir (44) provided outside the cylinder (4440), comprising:
a damping valve (4) which resists a flow of working oil from the oil chamber (41) to the reservoir (44);
a pressure-responsive throttle (6) which narrows a flow path of the working oil from the oil chamber (41) to the reservoir (44) via the damping valve (4) when a differential pressure between the oil chamber (41) and the reservoir (44) exceeds a predetermined value, the pressure-responsive throttle (6) comprising a valve seat (14) and a valve body (13) facing the valve seat (14) with a gap, the valve body (13) being configured to narrow the gap as a pressure loss in the working oil flowing through the gap increases;
a bypass valve (8) which allows the working oil to flow from the oil chamber (41) to the reservoir (44) bypassing the pressure-responsive throttle (6) when the differential pressure increases further after exceeding the predetermined value; and
a disk-shaped member (2) installed in the bottom of the cylinder (40), the disk-shaped member (2) comprising a through-hole (3) which allows the working oil to flow from the oil chamber (41) to the damping valve (4), wherein the damping valve (4) comprises a leaf valve which is disposed at an outlet of the through-hole (3) and increases a flow cross sectional area by elastically deforming the leaf valve depending on a differential pressure between the through-hole (3), and the reservoir (44);
**characterized in that**
the valve body (13) comprises a circular plate (13), an inner circumference of which is supported by a bolt (9) penetrating a center of the disk-shaped member (2) and an outer circumference of which is allowed to deform towards the valve seat (14), and the valve seat (14) comprises a projection formed in the disk-shaped member (2) projecting towards the outer circumference of the circular plate (13).

2. The base valve mechanism (1, 20) as defined in Claim 1, **characterized in that** the damping valve (4) comprises a minute opening (O) which allows a minute amount of the working oil to flow from the oil chamber (41) to the damping valve (4), irrespective of the differential pressure.

3. The base valve mechanism (1, 20) as defined in Claim 2, **characterized in that**:
the cylinder (40) encloses a piston which delimits the oil chamber (41) in the cylinder (40),
the damping valve (4) is configured so as not to cause the leaf valve to deform while allowing the working oil to flow from the oil chamber (41) to the reservoir (44) only through the minute opening (O) in a first speed region of piston displacement in a direction to cause the oil chamber (41) to contract,
the damping valve (4) is further configured to cause the leaf valve to elastically deform so as to allow the working oil to flow from the oil chamber (41) to the reservoir (44) via the through-hole (3) in a second speed region of piston displacement in the direction to cause the oil chamber (41) to contract, which is greater than the first speed region,
the pressure-responsive throttle (6) is configured to narrow a flow path from the oil chamber (41) to the damping valve (4) in a third speed region of piston displacement in the direction to cause the oil chamber (41) to contract, which is greater than the second speed region and corresponds to a region where the differential pressure between the oil chamber (41) and the reservoir (44) exceeds the predetermined value, and
the bypass valve (8) is configured to allow the working oil to flow from the oil chamber (41) to the reservoir (44) bypassing the pressure-responsive throttle (6) in a fourth speed region of piston displacement in the direction to cause the oil chamber (41) to contract, which is greater than the third speed region.

4. The base valve mechanism (1) as defined in Claim 3, **characterized in that** the bypass valve (8) is disposed in a bypass passage (7) which penetrates the bolt (9) to bypass the damping valve (4) and the pressure-responsive throttle (6), and is constituted by a spherical valve body seated on a valve seat (17) under a biasing force of a spring so as to open when the differential pressure exceeds the predetermined value.

5. The base valve mechanism (1, 20) as defined in any one of Claim 1 through Claim 44. **characterized by** a check valve (11) which allows the working oil to flow from the reservoir (44) to the oil chamber (41)

6. A base valve mechanism (1, 20) installed in a bottom of a cylinder (40) of a shock absorber (D) so as to cause working oil to move between a oil chamber (41) provided in the cylinder (40) and a reservoir (44) provided outside the cylinder (4440), comprising:
a damping valve (4) which resists a flow of working oil from the oil chamber (41) to the reservoir (44);
a pressure-responsive throttle (6) which narrows a flow path of the working oil from the oil chamber (41) to the reservoir (44) via the damping valve (4) when a differential pressure between the oil chamber (41) and the reservoir (44) exceeds a predetermined value, the pressure-responsive throttle (6) comprising a valve seat (22h) and a valve body (32) facing the valve seat (22h) with a gap, the valve body (32) being configured to narrow the gap as a pressure loss in the working oil flowing through the gap increases;
a bypass valve (8) which allows the working oil to flow from the oil chamber (41) to the reservoir (44) bypassing the pressure-responsive throttle (6) when the differential pressure increases further after exceeding the predetermined value;
a disk-shaped member (2) installed in the bottom of the cylinder (40), the disk-shaped member (2) comprising a through-hole (3) which allows the working oil to flow from the oil chamber (41) to the damping valve (4), wherein the damping valve (4) comprises a leaf valve which is disposed at an outlet of the through-hole (3) and increases a flow cross sectional area by elastically deforming the leaf valve depending on a differential pressure between the through-hole (3), and the reservoir (44);
**characterized in that**
a second disk-shaped member (22) which is fixed to the disk-shaped member (2) by a bolt (24) penetrates the disk-shaped member (2) and the second disk-shaped member (22), wherein
the valve body (32) comprises a circular plate (32), an inner circumference of which is supported by the bolt (24) and an outer circumference of which is allowed to deform towards the valve seat (22h), and the valve seat (22h) comprises a projection formed in the second disk-shaped member (22) projecting towards the outer circumference of the circular plate (32).

7. The base valve mechanism (20) as defined in Claim 6, **characterized in that** the bypass valve (8) is disposed at an outlet of a bypass passage (7) which penetrates the second disk-shaped member (22) so as to bypass the pressure-responsive throttle (6), and is constituted by a leaf valve which opens when a differential pressure upstream and downstream thereof exceeds a predetermined pressure.

8. The base valve mechanism (1, 20) as defined in Claim 7, **characterized by** a check valve (11) which allows the working oil to flow from the reservoir (44) to the oil chamber (41).

## Patentansprüche

1. Bodenventilmechanismus (1, 20), der in einem Boden eines Zylinders (40) eines Stoßdämpfers (D) installiert ist, um zu bewirken, dass sich Arbeitsöl zwischen einer Ölkammer (41), die in dem Zylinder (40) vorhanden ist, und einem Vorratsraum (44) bewegt, der außerhalb des Zylinders (40) vorhanden ist, wobei der Mechanismus umfasst:
ein Dämpfventil (4), das einem Strom von Arbeitsöl von der Ölkammer (41) zu dem Vorratsraum (44) Widerstand entgegensetzt;
eine auf Druck ansprechende Drossel (6), die einen Strömungsweg des Arbeitsöls von der Ölkammer (41) zu dem Vorratsraum (44) über das Dämpfventil (4) verengt, wenn ein Druckunterschied zwischen der Ölkammer (41) und dem Vorratsraum (44) einen vorgegebenen Wert übersteigt, wobei die auf Druck ansprechende Drossel (6) einen Ventilsitz (14) sowie einen dem Ventilsitz (14) mit einem Zwischenraum zugewandten Ventilkörper (13) umfasst und der Ventilkörper (13) so eingerichtet ist, dass er den Zwischenraum verengt, wenn ein Druckabfall des durch den Zwischenraum strömenden Arbeitsöls zunimmt;
ein Umgehungsventil (8), das zulässt, dass das Arbeitsöl von der Ölkammer (41) unter Umgehung der auf Druck ansprechenden Drossel (6) zu dem Vorratsraum (44) strömt, wenn der Druckunterschied weiter zunimmt, nachdem er den vorgegebenen Wert überstiegen hat; und
ein scheibenförmiges Element (2), das im Boden des Zylinders (40) installiert ist, wobei das scheibenförmige Element (2) ein Durchgangsloch (3) umfasst, das zulässt, dass das Arbeitsöl von der Ölkammer (41) zu dem Dämpfventil (4) strömt, das Dämpfventil (4) ein Membranventil umfasst, das an einem Auslass des Durchgangslochs (3) angeordnet ist, und es einen Strömungsquerschnitt vergrößert, indem es das Membranventil in Abhängigkeit von einem Druckunterschied zwischen dem Durchgangsloch (3) und dem Vorratsraum (44) elastisch verformt;
**dadurch gekennzeichnet, dass**
der Ventilkörper (13) eine kreisförmige Platte (13) umfasst, deren Innenumfang von einem Bolzen (9) getragen wird, der sich durch eine Mitte des scheibenförmigen Elementes (2) hindurch erstreckt, und deren Außenumfang sich auf den Ventilsitz (14) zu verformen kann, und
der Ventilsitz (14) einen Vorsprung umfasst, der in dem scheibenförmigen Element (2) ausgebildet ist und auf den Außenumfang der kreisförmigen Platte (13) zu vorsteht.

2. Bodenventilmechanismus (1, 20) nach Anspruch 1, **dadurch gekennzeichnet, dass** das Dämpfventil (4) eine kleine Öffnung (O) umfasst, die zulässt, dass eine kleine Menge des Arbeitsöls unabhängig von dem Druckunterschied von der Ölkammer (41) zu dem Dämpfventil (4) strömt.

3. Bodenventilmechanismus (1, 20) nach Anspruch 2, **dadurch gekennzeichnet, dass** der Zylinder (40) einen Kolben umschließt, der die Ölkammer (41) in dem Zylinder (40) begrenzt,
das Dämpfventil (4) so eingerichtet ist, dass es in einem ersten Geschwindigkeitsbereich der Kolbenverschiebung in einer Richtung, in der die Ölkammer (41) verkleinert wird, nicht bewirkt, dass sich das Membranventil verformt und dabei zulässt, dass das Arbeitsöl nur über die kleine Öffnung (O) von der Ölkammer (41) zu dem Vorratsraum (44) strömt,
das Dämpfventil (4) des Weiteren so eingerichtet ist, dass es in einem zweiten Geschwindigkeitsbereich der Kolbenverschiebung in der Richtung, in der die Ölkammer (41) verkleinert wird, der größer ist als der erste Geschwindigkeitsbereich, bewirkt, dass sich das Membranventil elastisch verformt, um zuzulassen, dass das Arbeitsöl von der Ölkammer (41) über das Durchgangsloch (3) zu dem Vorratsraum (44) strömt,
die auf Druck ansprechende Drossel (6) so eingerichtet ist, dass sie in einem dritten Geschwindigkeitsbereich der Kolbenverschiebung in der Richtung, in der die Ölkammer (41) verkleinert wird, der größer ist als der zweite Geschwindigkeitsbereich und einem Bereich entspricht, in dem der Druckunterschied zwischen der Ölkammer (41) und dem Vorratsraum (44) den vorgegebenen Wert übersteigt, einen Strömungsweg von der Ölkammer (41) zu dem Dämpfventil (4) verengt, und
das Umgehungsventil (8) so eingerichtet ist, dass es in einem vierten Geschwindigkeitsbereich der Kolbenverschiebung in der Richtung, in der die Ölkammer (41) verkleinert wird, der größer ist als der dritte Geschwindigkeitsbereich, zulässt, dass das Arbeitsöl von der Ölkammer (41) zu dem Vorratsraum (44) strömt und dabei die auf Druck ansprechende Drossel (6) umgeht.

4. Bodenventilmechanismus (1) nach Anspruch 3, **dadurch gekennzeichnet, dass** das Umgehungsventil (8) in einem Umgehungskanal (7) angeordnet ist, der durch den Bolzen (9) hindurch verläuft und der dabei das Dämpfventil (4) und die auf Druck ansprechende Drossel (6) umgeht, und es durch einen kugelförmigen Ventilkörper gebildet wird, der unter einer Spannkraft einer Feder so auf einem Ventilsitz aufsitzt, dass es sich öffnet, wenn der Druckunterschied den vorgegebenen Wert übersteigt.

5. Bodenventilmechanismus (1, 20) nach einem der Ansprüche 1 bis 4, **gekennzeichnet durch** ein Rückschlagventil (11), das zulässt, dass das Arbeitsöl von dem Vorratsraum (44) zu der Ölkammer (41) strömt.

6. Bodenventilmechanismus (1, 20), der in einem Boden eines Zylinders (40) eines Stoßdämpfers (D) installiert ist, um zu bewirken, dass sich Arbeitsöl zwischen einer Ölkammer (41), die in dem Zylinder (40) vorhanden ist, und einem Vorratsraum (44) bewegt, der außerhalb des Zylinders (40) vorhanden ist, wobei der Mechanismus umfasst:
ein Dämpfventil (4), das einem Strom von Arbeitsöl aus der Ölkammer (41) zu dem Vorratsraum (44) Widerstand entgegensetzt;
eine auf Druck ansprechende Drossel (6), die einen Strömungsweg des Arbeitsöls von der Ölkammer (41) zu dem Vorratsraum (44) über das Dämpfventil (4) verengt, wenn ein Druckunterschied zwischen der Ölkammer (41) und dem Vorratsraum (44) einen vorgegebenen Wert übersteigt, wobei die auf Druck ansprechende Drossel (6) einen Ventilsitz (22h) sowie einen dem Ventilsitz (22h) mit einem Zwischenraum zugewandten Ventilkörper (32) umfasst und der Ventilkörper (32) so eingerichtet ist, dass er den Zwischenraum verengt, wenn ein Druckabfall des durch den Zwischenraum strömenden Arbeitsöls zunimmt;
ein Umgehungsventil (8), das zulässt, dass das Arbeitsöl von der Ölkammer (41) unter Umgehung der auf Druck ansprechenden Drossel (6) zu dem Vorratsraum (44) strömt, wenn der Druckunterschied weiter zunimmt, nachdem er den vorgegebenen Wert überstiegen hat; und
ein scheibenförmiges Element (2), das im Boden des Zylinders (40) installiert ist, wobei das scheibenförmige Element (2) ein Durchgangsloch (3) umfasst, das zulässt, dass das Arbeitsöl von der Ölkammer (41) zu dem Dämpfventil (4) strömt, das Dämpfventil (4) ein Membranventil umfasst, das an einem Auslass des Durchgangslochs (3) angeordnet ist, und es einen Strömungsquerschnitt vergrößert, indem es das Membranventil in Abhängigkeit von einem Druckunterschied zwischen dem Durchgangsloch (3) und dem Vorratsraum (44) elastisch verformt;
**dadurch gekennzeichnet, dass**
ein zweites scheibenförmiges Element (22) an dem scheibenförmigen Element (2) mit einem Bolzen (24) befestigt ist, der sich durch das scheibenförmige Element (2) und das zweite scheibenförmige Element (22) hindurch erstreckt, wobei
der Ventilkörper (32) eine kreisförmige Platte (32) umfasst, deren Innenumfang von dem Bolzen (24) getragen wird und deren Außenumfang sich auf den Ventilsitz (22h) zu verformen kann, und der Ventilsitz (22h) einen Vorsprung umfasst, der in dem zweiten scheibenförmigen Element (22) ausgebildet ist und auf den Außenumfang der kreisförmigen Platte (32) zu vorsteht.

7. Bodenventilmechanismus (20) nach Anspruch 6, **dadurch gekennzeichnet, dass** das Umgehungsventil (8) an einem Auslass eines Umgehungskanals (7) angeordnet ist, der durch das zweite scheibenförmige Element (22) hindurch verläuft und dabei die auf Druck ansprechende Drossel (6) umgeht, und es durch ein Membranventil gebildet wird, das sich öffnet, wenn ein Druckunterschied stromauf und stromab von selbigem einen vorgegebenen Druck übersteigt.

8. Bodenventilmechanismus (1, 20) nach Anspruch 7, **gekennzeichnet durch** ein Rückschlagventil (11), das zulässt, dass das Arbeitsöl von dem Vorratsraum (44) zu der Ölkammer (41) strömt.

## Revendications

1. Mécanisme de soupape de base (1, 20) installé sur une partie inférieure d'un cylindre (40) d'un amortisseur de choc (D) de manière à entraîner le déplacement d'huile de travail entre une chambre d'huile (41) située dans le cylindre (40) et un réservoir (44) situé hors du cylindre (40), comprenant :
une soupape d'amortissement (4) qui résiste à un écoulement d'huile de travail de la chambre d'huile (41) au réservoir (44) ;
une soupape d'étranglement sensible à la pression (6) qui rend plus étroit un chemin d'écoulement de l'huile de travail de la chambre d'huile (41) au réservoir (44) à travers la soupape d'amortissement (4) lorsqu'une pression différentielle entre la chambre d'huile (41) et le réservoir (44) dépasse une valeur prédéterminée, la soupape d'étranglement sensible à la pression (6) comprenant un siège de soupape (14) et un corps de soupape (13) faisant face au siège de soupape (14) avec un espace, le corps de soupape (13) étant configuré pour rendre plus étroit l'espace à mesure qu'une perte de pression de l'huile de travail s'écoulant à travers l'espace augmente ;
une soupape de dérivation (8) qui permet à l'huile de travail de s'écouler de la chambre d'huile (41) au réservoir (44) en contournant la soupape d'étranglement sensible à la pression (6) lorsque la pression différentielle continue à augmenter après avoir dépassé la valeur prédéterminée ; et
un élément en forme de disque (2) installé dans la partie inférieure du cylindre (40), l'élément en forme de disque (2) comprenant un orifice de passage (3) qui permet à l'huile de travail de s'écouler de la chambre d'huile (41) à la soupape d'amortissement (4), dans lequel la soupape d'amortissement (4) comprend une soupape à lamelle qui est disposée à une sortie de l'orifice de passage (3) et étend une zone transversale d'écoulement en déformant élastiquement la soupape à lamelle en fonction d'une pression différentielle entre l'orifice de passage (3) et le réservoir (44) ;
**caractérisé en ce que**
le corps de soupape (13) comprend une plaque circulaire (13), dont une circonférence intérieure est supportée par un boulon (9) pénétrant un centre de l'élément en forme de disque (2) et dont il est permis à une circonférence extérieure de se déformer vers le siège de soupape (14), et le siège de soupape (14) comprend une protubérance formée dans l'élément en forme de disque (2) faisant saillie vers la circonférence extérieure de la plaque circulaire (13).

2. Mécanisme de soupape de base (1, 20) selon la revendication 1, **caractérisé en ce que** la soupape d'amortissement (4) comprend une ouverture minuscule (O) qui permet à une faible quantité d'huile de travail de s'écouler de la chambre d'huile (41) à la soupape d'amortissement (4), indépendamment de la pression différentielle.

3. Mécanisme de soupape de base (1, 20) selon la revendication 2, **caractérisé en ce que** le cylindre (40) renferme un piston qui délimite la chambre d'huile (41) dans le cylindre (40),
la soupape d'amortissement (4) est configurée pour ne pas entraîner la déformation de la soupape à lamelle tout en permettant à l'huile de travail de s'écouler de la chambre d'huile (41) au réservoir (44) uniquement à travers l'ouverture minuscule (O) dans une région de première vitesse de déplacement de piston dans une direction afin d'entraîner la contraction de la chambre d'huile (41),
la soupape d'amortissement (4) est en outre configurée pour entraîner la déformation élastique de la soupape à lamelle de manière à permettre à l'huile de travail de s'écouler de la chambre d'huile (41) au réservoir (44) à travers l'orifice de passage (3) dans une région de deuxième vitesse de déplacement de piston dans la direction afin d'entraîner la contraction de la chambre d'huile (41), qui est plus grande que la région de première vitesse,
la soupape d'étranglement sensible à la pression (6) est configurée pour rendre plus étroit un chemin d'écoulement de la chambre d'huile (41) à la soupape d'amortissement (4) dans une région de troisième vitesse de déplacement de piston dans la direction afin d'entraîner la contraction de la chambre d'huile (41), qui est plus grande que la région de deuxième vitesse et correspond à une région où la pression différentielle entre la chambre d'huile (41) et le réservoir (44) dépasse la valeur prédéterminée, et
la soupape de dérivation (8) est configurée pour permettre à l'huile de travail de s'écouler de la chambre d'huile (41) au réservoir (44) en contournant la soupape d'étranglement sensible à la pression (6) dans une région de quatrième vitesse de déplacement de piston dans la direction entraînant la contraction de la chambre d'huile (41), qui est plus grande que la région de troisième vitesse.

4. Mécanisme de soupape de base (1) selon la revendication 3, **caractérisé en ce que** la soupape de dérivation (8) est disposée dans un passage de dérivation (7) qui pénètre le boulon (9) pour contourner la soupape d'amortissement (4) et la soupape d'étranglement sensible à la pression (6), et est constituée par un corps de soupape sphérique situé sur un siège de soupape (17) sous une force de sollicitation d'un ressort de sorte à s'ouvrir lorsque la pression différentielle dépasse la valeur prédéterminée.

5. Mécanisme de soupape de base (1, 20) selon l'une quelconque des revendications 1 à 4, **caractérisé par** un clapet anti-retour (11) qui permet à l'huile de travail de s'écouler du réservoir (44) à la chambre d'huile (41).

6. Mécanisme de soupape de base (1, 20) installé dans une partie inférieure d'un cylindre (40) d'un amortisseur de choc (D) de manière à entraîner le déplacement d'huile de travail entre une chambre d'huile (41) située dans le cylindre (40) et un réservoir (44) situé hors du cylindre (40), comprenant :
une soupape d'amortissement (4) qui résiste à un écoulement d'huile de travail de la chambre d'huile (41) au réservoir (44) ;
une soupape d'étranglement sensible à la pression (6) qui rend plus étroit un chemin d'écoulement de l'huile de travail de la chambre d'huile (41) au réservoir (44) à travers la soupape d'amortissement (4) lorsqu'une pression différentielle entre la chambre d'huile (41) et le réservoir (44) dépasse une valeur prédéterminée, la soupape d'étranglement sensible à la pression (6) comprenant un siège de soupape (22h) et un corps de soupape (32) faisant face au siège de soupape (22h) avec un espace, le corps de soupape (32) étant configuré pour rendre plus étroit l'espace à mesure qu'une perte de pression de l'huile de travail s'écoulant à travers l'espace augmente ;
une soupape de dérivation (8) qui permet à l'huile de travail de s'écouler de la chambre d'huile (41) au réservoir (44) en contournant la soupape d'étranglement sensible à la pression (6) lorsque la pression différentielle continue à augmenter après avoir dépassé la valeur prédéterminée ;
un élément en forme de disque (2) installé dans la partie inférieure du cylindre (40), l'élément en forme de disque (2) comprenant un orifice de passage (3) qui permet à l'huile de travail de s'écouler de la chambre d'huile (41) à la soupape d'amortissement (4), dans lequel la soupape d'amortissement (4) comprend une soupape à lamelle qui est disposée à une sortie de l'orifice de passage (3) et étend une zone transversale d'écoulement en déformant élastiquement la soupape à lamelle en fonction d'une pression différentielle entre l'orifice de passage (3) et le réservoir (44) ;
**caractérisé en ce qu'**un deuxième élément en forme de disque (22), qui est fixé à l'élément en forme de disque (2) par un boulon (24), pénètre dans l'élément en forme de disque (2) et le deuxième élément en forme de disque (22), dans lequel
le corps de soupape (32) comprend une plaque circulaire (32), dont une circonférence intérieure est supportée par le boulon (24) et dont il est permis à une circonférence extérieure de se déformer vers le siège de soupape (22h), et le siège de soupape (22h) comprend une protubérance formée dans le deuxième élément en forme de disque (22) faisant saillie vers la circonférence extérieure de la plaque circulaire (32).

7. Mécanisme de soupape de base (20) selon la revendication 6, **caractérisé en ce que** la soupape de dérivation (8) est disposée à une sortie d'un passage de dérivation (7) qui pénètre dans le deuxième élément en forme de disque (22) de manière à contourner la soupape d'étranglement sensible à la pression (6), et est constituée par une soupape à lamelle qui s'ouvre lorsqu'une pression différentielle en amont et en aval de celui-ci dépasse une pression prédéterminée.

8. Mécanisme de soupape de base (1, 20) selon la revendication 7, **caractérisé par** un clapet anti-retour (11) qui permet à l'huile de travail de s'écouler du réservoir (44) à la chambre d'huile (41).
